# FASCICULE DE BREVET EUROPEEN

(11) **EP 1 153 030 B1**
(45) Date de publication et mention de la délivrance du brevet: **11.09.2002**
(21) Numéro de dépôt: 00903787.0
(22) Date de dépôt: 10.02.2000
(51) Int. Cl.: C07F 9/40, C08F 4/00

(54) **ALCOXYAMINES ISSUES DE NITROXYDE BETA-PHOSPHORES, LEUR UTILISATION EN POLYMERISATION RADICALAIRE**
AUS BETA-PHOSPHORYLIERTE NITROXIDEN ABKÖMMIGE ALKOXYAMINE, IHRE VERWENDUNG FUR RADIKAL POLYMERISATION
ALKOXYAMINES DERIVED FROM NITROXIDES BETA PHOSPHORYLATED, THEIR USE FOR RADICAL POLYMERISATION

(30) Priorité: 18.02.1999 FR 9901998
(43) Date de publication de la demande: 14.11.2001
(73) Titulaire: Atofina, 92800 Puteaux (FR)
(72) Inventeur: COUTURIER, Jean-Luc, F-69006 Lyon (FR); HENRIET-BERNARD, Christiane, D-65719 Hofheim-Lorsbach (DE); LE MERCIER, Christophe, F-13004 Marseille (FR); TORDO, Paul, F-13004 Marseille (FR); LUTZ, Jean-François, F-34000 Montpellier (FR)
(86) Numéro de dépôt international: FR0000335
(87) Numéro de publication internationale: WO00049027

(56) Documents cités:
- WO-A-00/40526
- US-A- 5 077 329
- HAWKER C J ET AL: "INITIATING SYSTEMS FOR NITROXIDE-MEDIATED "LIVING" FREE RADICAL POLYMERIZATIONS: SYNTHESIS AND EVALUATION" MACROMOLECULES, vol. 29, no. 16, 29 juillet 1996 (1996-07-29), pages 5245-5254, XP000596748 ISSN: 0024-9297 cité dans la demande
- SHATZMILLER S.: "Synthesen von alpha-Aminophosphonsäuren aus N-Ethoxy- iminium-Salzen, II" JUSTUS LIEBIGS ANNALEN DER CHEMIE., no. 9, 1993 - septembre 1993 (1993-09), pages 955-958, XP002115861 VERLAG CHEMIE GMBH. WEINHEIM., DE ISSN: 0075-4617
- SHATZMILLER S.: "Synthesis of alpha-Amino Phosphonic Acids via Oxoiminium Salts" JUSTUS LIEBIGS ANNALEN DER CHEMIE., no. 2, 1991 - février 1991 (1991-02), pages 161-164, XP002115862 VERLAG CHEMIE GMBH. WEINHEIM., DE ISSN: 0075-4617
- LE MERCIER C ET AL: "Characteristics of phosphonylated nitroxides and alkoxyamines used in controlled/ "living" radical polymerizations" POLYM. PREPR. (AM. CHEM. SOC., DIV. POLYM. CHEM.) (ACPPAY,00323934);1999; VOL.40 (2); PP.313-314, XP000909196 CNRS et Universites d'Aix-Marseille;Laboratoire Structure et Reactivite des Especes Paramagnetiques; Marseille; 13397; Fr. (FR)
- BENOIT D ET AL: "Development of a Universal Alkoxyamine for "Living" Free Radical Polymerizations" J. AM. CHEM. SOC. (JACSAT,00027863);1999; VOL.121 (16); PP.3904-3920, XP002115863 IBM Almaden Research Center;NSF Center for Polymeric Interfaces and Macromolecular Assemblies; San Jose; 95120-6099; CA; USA (US)
- MARSAL P ET AL: "Thermal stability of O-H and O-alkyl bonds in N-alkoxyamines. A density functional theory approach" J. PHYS. CHEM. A (JPCAFH,10895639);1999; VOL.103 (15); PP.2899-2905, XP002115864 CNRS et Universites d'Aix-Marseille I et III;Laboratoire de Chimie Theorique UMR 6517; Marseille; 13397; Fr. (FR)

## Description

La présente invention a pour objet des hydroxylamines α,β,β-trisubstituées, ci-après désignées par alcoxyamines, obtenues à partir de nitroxyde-β-phosphorés, utilisables notamment comme amorceurs des polymérisations radicalaires. L'utilisation des alcoxyamines telles que celles dérivées du (2,2,6,6-tétraméthyl-pipéridinyl)-N-oxyde (TEMPO) dans la préparation des macromolécules a donné lieu à de nombreuses publications.

Ainsi, HAWKER C.J. et coll. (Macromolécules 1996, 29, pages 5245-5254) ont montré que l'utilisation d'alcoxyamines dérivées du TEMPO telles que le (2',2',6',6'-tétraméthyl-1'-pipéridinyloxy)méthylbenzène comme amorceurs de polymérisation radicalaire du styrène permettait de contrôler la polymérisation et d'accéder à des polymères bien définis avec des bas indices de polydispersité et ils ont constaté que les vitesses de polymérisation étaient sensiblement équivalentes aux vitesses obtenues lorsqu'ils utilisaient des amorceurs classiques tels que l'AIBN ou le peroxyde de benzoyle en présence de TEMPO.

On a maintenant trouvé que l'utilisation d'alcoxyamines dérivées de nitroxydes β-phosphorés comme amorceurs des polymérisations ou copolymérisations d'au moins un monomère polymérisable par voie radicalaire procurait un excellent contrôle de la polydispersité tout en assurant une bonne vitesse de polymérisation ou de copolymérisation.

L'invention a donc pour objet des alcoxyamines de formule : 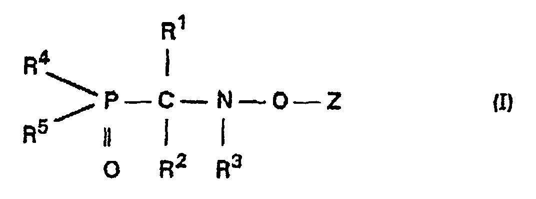 dans laquelle R¹ et R², identiques ou différents, représentent un atome d'hydrogène, un radical alkyle linéaire ou ramifié ayant un nombre d'atomes de carbone allant de 1 à 10, un radical aryle, un radical aralkyle ayant un nombre d'atomes de carbone au plus égal à 10, ou bien R¹ et R² sont reliés entre eux de façon à former un cycle incluant l'atome de carbone portant lesdits R¹ et R², ledit cycle ayant un nombre d'atomes de carbone, incluant le carbone porteur des radicaux R¹ et R², allant de 3 à 8 ; R³ représente un radical hydrocarboné, linéaire ou ramifié, saturé ou insaturé, pouvant comprendre au moins un cycle, ledit radical ayant un nombre d'atomes de carbone allant de 1 à 30 ; R⁴ et R⁵ identiques ou différents, représentent un radical alkyle, linéaire ou ramifié, un radical cycloalkyle, aryle, alcoxyle, aryloxyle, aralkytoxyle, perfluoroalkyle, aralkyle, thioalkyle ayant un nombre d'atomes de carbone allant de 1 à 20, ou bien R⁴ et R⁵ sont reliés entre eux de façon à former un cycle incluant l'atome de phosphore, ledit hétérocycle ayant un nombre d'atomes de carbone allant de 2 à 6 et peut contenir en outre un ou plusieurs atomes d'oxygène ou de soufre ;
Z est un radical CF₃(CF₂)₅-, (CH₃)₂C(CN)- ou un reste de formule : 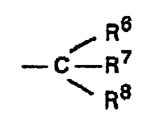 dans laquelle R⁶, R⁷ et R⁸, identiques ou différents, représentent un atome d'hydrogène, un radical cyano, un radical cycloalkyle ayant un nombre d'atomes de carbone allant de 3 à 12 ; un radical -(CH₂)n C(O)OR⁹ dans lequel R⁹ représente un alkyle, linéaire ou ramifié, ayant un nombre d'atomes de carbone allant de 1 à 6, n=0 à 6.

Parmi les composés de formule (I), on préfère tout particulièrement ceux dans lesquels R¹ =H, R²=R³=(CH₃)₃C-, R⁴=R⁵=CH₃CH₂O-, Z=(CH₃l₂ (CH₃)₂C(CN)- (R⁶=R⁷=CH₃-, R⁸=NC-), CH₃OC(O)C(CH₃)₂-, (R⁶=R⁷=CH₃-, R⁸=-(CH₂)nC(O)OR⁹ avec n=0 et R⁹=-CH₃) ; CH₃OC(O)CH(CH₃)- (R⁶=H, R⁷=CH₃-, R⁸= (CH₂)ₙC(O)OR⁹ avec n=0 et R⁹= -CH₃) ; C₆F₁₃-.

Les alcoxyamines de formule (I) peuvent être préparées selon des méthodes connues dans la littérature. La méthode la plus courante implique le couplage d'un radical carboné avec un radical nitroxyde. Le radical carboné Z* peut être généré par différentes méthodes décrites dans la littérature : décomposition d'un composé azoïque, abstraction d'un atome d'hydrogène sur un substrat approprié, addition d'un radical sur une oléfine. Le radical Z* peut également être généré à partir d'un composé organométallique comme un organomagnésien Z-MgX tel que décrit par Hawker C.J. et coll, dans Macromolecules 1996, 29, 5245-5254 ou à partir d'un dérivé halogéné Z-X en présence d'un système organométallique comme CuCl/bipyridine selon une réaction de type ATRA (Atom Transfer Radical Addition) tel que décrit par Dorota Greszta et coll. dans Macromolecules 1996, 29, 7661-7670.

Parmi toutes ces méthodes, on utilisera de préférence pour la préparation des composés de formule (I), la méthode mettant en jeu la réaction ATRA.

Cette méthode consiste à transférer un atome ou un groupe d'atomes sur une autre molécule en présence d'un système catalytique organométallique tel que CuBr/bipyridine et en milieu solvant.

Le mode opératoire généralement utilisé consiste à mettre en solution le complexe organo-métallique tel que CuBr/bipyridine dans un solvant organique de préférence aromatique tel que le benzène ou le toluène puis à introduire dans la solution le composé ZX et le nitroxyde-β phosphoré.

Le mélange réactionnel est agité ensuite à une température comprise entre 20°C et 70°C pendant une durée au moins égale à 48 heures, voire plus.

Ensuite, le précipité est filtré, rincé avec un solvant tel que l'éther puis le filtrat est lavé avec une solution aqueuse à 5 % en poids de CuSO₄ puis enfin avec de l'eau.

Après séchage sur MgSO₄, les solvants sont évaporés sous pression réduite.

Les alcoxyamines de formule (I) selon la présente invention ainsi que les alcoxyamines de formule (I) ou R⁶, R⁷ et R⁸ du reste Z, identiques ou différents, représentent un radical alkyle, linéaire ou ramifié, ayant un nombre d'atome de carbone allant de 1 à 10, un radical phényle, un radical benzyle peuvent être utilisées pour la polymérisation et la copolymérisation de tout monomère présentant une double liaison carbone-carbone susceptible de polymériser par voie radicalaire. De préférence on utilise les composés de formule (I) R¹=H, R²=R³=(CH₃)₃C-, R⁴=R⁵=CH₃CH₂O- et que Z répond à l'un des restes : C₆H₅CH₂-, (CH₃)₂C(CN)-, CH₃OC(O)C(CH₃)₂-, CH₃OC(O)CH(CH₃)-, C₆F₁₃-, C₆H₅CH(CH₃)-, C₆H₅C(CH₃)₂-, C₆H₁₂-, CH₃(CH₂)₅-. La polymérisation ou la copolymérisation est réalisée dans les conditions habituelles connues de l'homme du métier compte tenu du ou des monomères considérés. Les monomères considérés peuvent être un monomère vinylaromatique (styrène, styrènes substitués), un diène, un monomère acrylique tel que l'acrylate de méthyle ou l'acrylate de butyle ou un monomère méthacrylique. Le monomère peut également être le chlorure de vinyle, le difluorure de vinylidène ou l'acrylonitrile.

Les alcoxyamines (I) peuvent être avantageusement introduites dans le milieu de polymérisation ou de copolymérisation à des teneurs allant de 0,005 % à 5 % en poids par rapport au(x) monomère(s) mis en oeuvre.

Les exemples qui suivent illustrent l'invention.

Le β-nitroxyde phosphoré de formule : 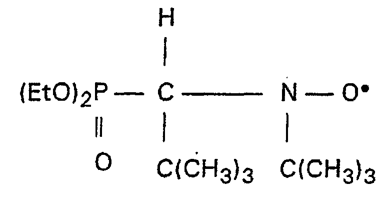 sera utilisé dans les exemples ci-après et sera désigné par DEPN.

Il a été obtenu par oxydation, du 2,2-diméthyl-1-(1,1-diméthyléthylamino)propyl phosphonate de diethyle au moyen de l'acide métachloroperbenzoïque selon un protocole décrit dans la demande internationale WO 96/24620.

Les composés obtenus ont été caractérisés par analyse élémentaire et par RMN du ¹H, ¹³C, ³¹P et ¹⁹F.

Les spectres de RMN ont été effectués sur un appareil BRUKER AC 100 (¹H, 100 MHz ; ³¹P, 40,53 MHz ; ¹⁹F, 94,22 MHz; ¹³C, 25, 18 MHz). Les RMN ¹³C et ³¹P sont réalisées avec découplage au ¹H.

Les déplacements chimiques δ sont donnés en ppm, par rapport au tétraméthylsilane (référence interne) pour le proton et le carbone, par rapport à H₃PO₄ à 85 % (référence externe) pour le phosphore et par rapport à l'acide trifluoroacétique pour le fluor.

### EXEMPLE 1

### Synthèse du N-tertiobutyl, N-1-diéthylphosphono-2,2-diméthylpropyl, O-1-phényléthylhydroxylamine (1):

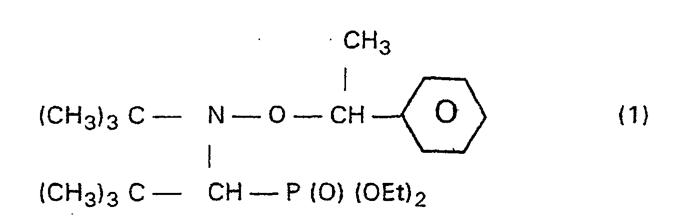

Dans un tube de Schlenk de 100 ml purgé à l'argon, on introduit 0,57 g de CuBr (4 mmol) et 1,25 g de 2,2'-bipyridine (8 mmol). On ajoute 0,74 g de (1-bromoéthyl)benzène (4 mmol) et 0,68 g de DEPN 86 % (2 mmol) dissous dans 9 ml de toluène anhydre. Sous agitation, on laisse réagir pendant 48 heures à température ambiante. Le mélange réactionnel est filtré sur célite. Le filtrat est lavé avec une solution aqueuse à 5 % de sulfate de cuivre, puis à l'eau. La phase organique est séchée sur sulfate de magnésium, puis le solvant est évaporé. Le produit est purifié par chromatographie sur colonne de silice en utilisant un éluant pentane/éther 6/4. On obtient 0,75 g du composé (1) (rendement=95 %) sous la forme de deux diastéréoisomères dans des proportions 64/36 déterminées sur le spectre ³¹P du mélange brut par intégration des signaux à 23,14 et 24,36 ppm (I/II = 64/36).

Les résultats analytiques sont donnés ci-après :

Isomère I :
RMN ³¹P(CDCl₃) : δ 23,14
RMN ¹H(CDCl₃) : δ 0,88 (t,J_{H-H}=7,2Hz,3H) ; 1,21
-1,27 (m,21H) ; 1,55 (d, J_{H-H}=6,6Hz,3H) (s,9H) ; 3,40 (d,J_{H-P}=26Hz, 1H) ; 3,18-3,40 et 3,70-4,05 (m, 4H) ; 5,22 (q, J_{H-H} = 6,6Hz, 1H) ; 7,24-7,47 (m,5H).
RMN ¹³C (CDCl₃) : δ 16,23 (2d,J_{C-P}=7Hz, CH₃CH₂), 21,18 (s,CH₃CH), 28,19 (s,CH₃-C-CH), 30,63 (d,J_{C-P}=7Hz, CH₃-CN), 35,33 (d,J_{C-P}=6Hz, C-CH-P), 58,58 (d, J_{C-P}=7,5Hz, C-CH₃), 61,4 (d,J_{C-P} =7Hz, CH₂-O), 70,06 (d, J_{C-P} = 138,5 Hz, CH-P), 78,36 (s, CH-O), 127,33 (s,CH ar), 127,81 (s,CH ar), 127,88 (s,CH ar), 143,31 (s, C ar).
Microanalyse (C₂₁H₃₇NO₄P) : % calculé C 63,12 ; H 9,59 ; N 3,51. % trouvé C 63,01 ; H 9,60 ; N 3,42.

Isomère II :
RMN ³¹P (CDCl₃) : δ 24,36. RMN 1H (CDCl₃) : δ 0,82 (s,9H) ; 1,22 (s,9H) ; 1,29 (t, J_{H-H} 7,0Hz , 3H) ; 1,32 (t, J_{H-H}=7,0Hz, 3H) ; 1,58 (d, J_{H-H}=6,7Hz, 3H) ; 3,32 (d, J_{H-P}=26,2Hz, 1H) ; 3,9-4,2 et 4,3-4,4 (m, 4H) ; 4,97 (q,J_{H-H}=6,8Hz, 1H) ; 7,17-7,3 (m, 5H).
RMN ¹³C (CDCl₃) : δ 16,24 (d,J_{C-P}=7,1Hz, CH₃CH₂), 16,71 (d, J_{C-P}=5,2Hz, CH₃CH₂), 24,00 (s, CH₃CH), 28,50 (s, CH₃-C-CH), 30,12 (d, J_{C-P}=5,7Hz, CH₃-C-N), 35,37 (d, J_{C-P}=5,8Hz, C-C_{H-P}), 58,80 (d, J_{C-P} = 7,4Hz, CH₂-O), 61,10 (s, C-N), 61,56 (d, J_{C-P}=6Hz, CH₂-O), 69,84 (d, J_{C-P}=138,4Hz, CH-P), 85,23 (s, CH-O), 126,96 (s, CH ar), 127,08 (s, CH ar), 127,95 (s, CH ar), 145,36 (s, C ar).
Microanalyse (C₂₁H₃₇NO₄P) : % calculé C 63,12 ; H 9,59 ; N 3,51. % trouvé C 63,05 ; H 9,51 ; N 3,50.

### EXEMPLE 2

### Synthèse du N-tertiobutyl, N-1-diéthylphosphono-2,2-diméthylpropyl, O-benzylhydroxylamine (2) :

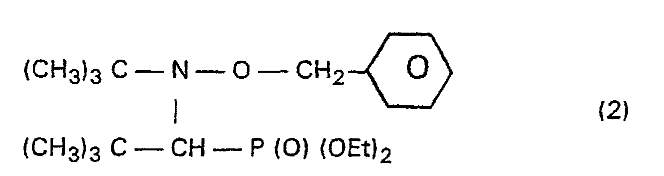

Le mode opératoire est le même que pour l'exemple 1. Les réactifs utilisés sont : bromure de benzyle (1,03 g, 6 mmol), CuBr (0,86 g, 6 mmol), 2,2'-bipyridine (1,87 g, 12 mmol), DEPN 72 % (1,23 g, 3 mmol), benzène (16 ml). Le produit est purifié par chromatographie sur colonne de silice (éluant pentane/acétate d'éthyle 7/3). On obtient 0,46 g du composé (2) (rendement=40 %) sous forme d'un solide blanc de point de fusion égal à 68-70°C.

Les résultats analytiques sont donnés ci-après :
Micronalyse (C₂₀H₃₆NO₄P) :
   % calculé : C 62,32 ; H 9,41 ; N 3,63
   % trouvé : C62,52 ; H 9,27 ; N 3,18.
   RMN ³¹P(CDCl₃) : δ 23,38
   RMN ¹H (CDCl₃) : δ 1,01 (t, J_{H-H}=7Hz, 3H), 1,17 (s, 9H), 1,20 (s, 9H), 1,23 (t, J_{H-H}=7Hz, 3H), 3,26 (d, J_{H-P}=24,3Hz, 1H), 3,45-3,8 et 3,85-4,2 (m, 4H), 4,56 (d, J_{H-H})=9,3Hz, 1H), 5,21 (d, J_{H-H}=9,5Hz, 1H), 7,27,5 (m, 5H).
   RMN ¹³C (CDCl₃) : δ 16,18 (d, J_{C-P}=7,1 Hz, CH₃CH₂), 16,31 (d, J_{C-P}=5,8Hz, CH₃CH₂), 27,74 (s, CH₃-C-CH), 30,10 (d, J_{C-P}=6,34Hz, CH₃-C-N), 35,26 (d, J_{C-P}=5,4Hz, C-CH-P), 58,72 (d, J_{C-P}=7,3Hz, CH₂), 61,56 (d, J_{C-P}=7,0Hz, CH₂-O), 61,97 (s, C-N), 69,64 (d, J_{C-P}=140Hz, C_{H-P}), 77,79 (s, CH₂-O), 127,65 (s, CH ar), 127,95 (s, CH ar) ; 129,56 (s, CH ar), 136,79 (s, C ar).

### EXEMPLE 3

### Synthèse du N-tertiobutyl, N-1-diéthylphosphono-2,2-diméthylpropyl, O-1-cyano-1-méthyléthylhydroxylamine (3) :

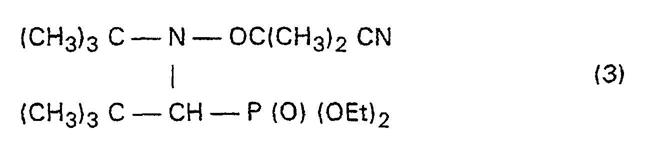

Le mode opératoire est le même que pour l'exemple 1. Les réactifs utilisés sont : 2-bromo-2-méthylpropionitrile (0,89 g, 6 mmol), CuBr (0,86 g, 6 mmol), 2,2'bipyridine (1,87 g, 12 mmol), DEPN 72 % (1,23 g, 3 mmol), benzène (16 ml). Le produit est purifié par chromatographie sur colonne de silice (éluant pentane/acétate d'éthyle 5/5). On obtient 0,77 g du composé (3) (rendement = 73 %).

Le 2-bromo-2-méthylpropionitrile est préparé par bromation de l'isobutyronitrile par la N-bromosuccinimide à reflux dans CCl₄.

Les résultats analytiques sont donnés ci-après :
RMN ³¹P (CDCl₃) : δ 23,04
RMN ¹H (CDCl₃) : δ 1,25-1,37 : m, 1,72 (s, 3H), 1,89 (s, 3H), 3,38 (d, J_{H-P}=24,3 Hz, 1H), 3,8 et 4,4 (m, 4H).
RMN ¹³C(CDCl₃) : δ 16,25 (d, J_{C-P}=6,6Hz, CH₃CH₂), 16,68 (d, J_{C-P}=5,4Hz, CH₃CH₂), (s, CH₃-C-CH), 28,86 (s, CH₃-C-O), 29,07 (s, CH₃-C-O), 30,50 (d, J_{C-P}=5,5Hz, CH₃), 36,16 (d, J_{C-P}=5,5Hz, C-CH-P), 59,20 (d, J_{C-P}=7,3Hz, CH₂), 61,61 (d, J_{C-P}=5,9Hz, CH₂), (s, C-N), 69,84 (d, J_{C-P}=138,8Hz, CH-P), 77,78 (s, C-CN), 121,21 (s, CN).

### EXEMPLE 4

### Synthèse du N-tertiobutyl, N-1-diéthylphosphono-2,2-diméthylpropyl, O-1-méthoxycarbonyléthylhydroxylamine (4) :

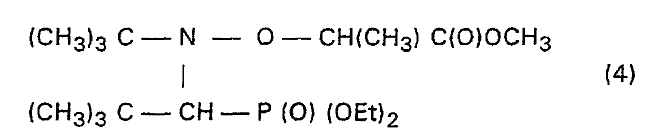

Le mode opératoire est le même que pour l'exemple 1. Les réactifs utilisés sont : 2-bromoproprionate de méthyle (1 g, 6 mmol), CuBr (0,86 g, 6 mmol), 2,2'-bipyridine (1,87 g, 12 mmol), DEPN 86 % (1,08 g, 3 mmol), benzène (16 ml). Le produit est purifié par chromatographie sur colonne de silice (éluant pentane/acétate d'éthyle 5/5). On obtient 1,07 g de composé (4) sous la forme de deux diastéréoisomères dans les proportions 56/44 (rendement = 93 %).

Rapport diastéréoisomérique dans les proportions 56/44 déterminées sur le spectre ³¹P du mélange brut par intégration des signaux à 23,55 et 22,96 ppm (I/II = 56/44).

Isomère I :
RMN ³¹P (CDCl₃) : δ 23,55.
RMN ¹H (CDCl₃) : δ 1,10 (s, 9H) ; 1,16 (s, 9H) ; 1,30 (t, J_{H-H} =7Hz, 6H) ; 1,50 (d, J_{H-P}=7Hz, 3H) ; 3,28 (d, J_{H-P}=25,3Hz, 1H) ; 3,70 (s, 3H) ; 3,9-4,3 (m, 4H) ; 4,60 (q, 1H).
RMN ¹³C (CDCl₃) : δ 16,18 (d, J_{C-P}=6Hz, CH₃CH₂), 16,48 (d, J_{C-P}=6Hz, CH₃CH₂), 19,09 (s, CH₃CH), 27,83 (s, CH₃-C-CH), 29,57 (d, J_{C-P}=6Hz, CH-C-N), 35,53 (d, J_{C-P}=5Hz, C-CH-P), 51,34 (s, O-CH₃), 58,73 (d, J_{C-P}=7,4Hz, CH₂), 61,59 (s, C-N), 61,77 (d, J_{C-P}=6,6Hz, CH₂), 69,62 (d, J_{C-P}=139,4 Hz, CH-P), 82,38 (s, CH-O), 174,33 (s, C=O).
Microanalyse (C₁₇H₃₆NO₅P) : % calculé C 53,51 ; H 9,52, N 3,67. % trouvé C 53,50 ; H 9,49 ; N 3,55.

Isomère II :
RMN ³¹P (CDCl₃) : δ 22,96.
RMN ¹H (CDCl₃) : δ 1,13 (s, 9H) ; 1,16 (s, 9H) ; 1,27 et 1,29 (2t, J_{H-H}=7Hz, 6H) ; 1,47 (d, J_{H-H}=7Hz, 3H) ; 3,36 (d, J_{H-P}=26,4Hz, 1H); 3,70 (s, 3H) ; 3,85-4,3 (m, 4H) ; 4,65 (q, 1H).
RMN ¹³C (CDCl₃) : δ 16,32 (d, J_{C-P}=6Hz, CH₃CH₂), 16,66 (d, J_{C-P}=6Hz, CH₃CH₂), 17,99 (s, CH₃CH), 28,09 (s, CH₃-C-CH), 30,35 (d, J_{C-P}=6Hz, CH₃-C-N), 37,47 (d, J_{C-P}=5Hz, C-CH-P), 51,54 (s, O-CH₃), 59,02 (d, J_{C-P}=7,7Hz, CH₂), 61,51 (s, C-N), 61,97 (d, J_{C-P}=6Hz, CH₂), 69,39 (d, J_{C-P}=139,6 Hz, CH-P), 77,10 (s, CH-O) 173,23 (s, C=O).
Microanalyse (C₁₇H₃₆NO₅P) : % calculé C 53,51 ; H 9,52, N 3,67. % trouvé C 53,39 ; H 9,34 ; N 3,50.

### EXEMPLE 5

### Synthèse du N-tertiobutyl, N-1-diéthylphosphono-2,2-diméthylpropyl, O-1-méthyl-1-méthoxycarbonyéthylhydroxylamine (5) :

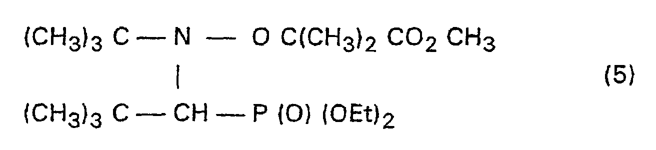

Le mode opératoire est le même que pour l'exemple 1. Les réactifs utilisés sont : 2-bromo-2-méthylpropionate de méthyle (1,09 g, 6 mmol), CuBr (0,86 g, 6 mmol), 2,2'-bipyridine (1,87 g, 12 mmol), DEPN 86 % (1,08 g, 3 mmol), benzène (16 ml). Le produit est purifié par chromatographie sur colonne de silice (éluant pentanelacétate d'éthyle 5/5). On obtient 0,47 g du composé (5) (rendement = 43 %).

Le 2-bromo-2-méthylpropionate de méthyle est préparé par réaction du méthanol sur le bromure de 2-bromo-2-méthylpropionyle.
RMN ³¹P (CDCl₃) : δ 24,46.
RMN ¹H (CDCl₃) : δ 1,10 (s, 9H) ; 1,17 (s, 9H) ; 1,28 (m, 6H) ; 1,57 et 1,63 (2s, 6H) ; 3,24 (d, J_{H-P}=26Hz, 1H) ; 3,67 (s, 3H) ; 3,9-4,3 (m, 4H).
RMN ¹³C (CDCl₃) : δ 18,75 (d, J_{C-P}=6,9Hz, CH₃CH₂), 16,11 (d, J_{C-P}=5,9Hz, CH₃CH₂), 22,60 (s, CH₃C-O), 26,79 (s, CH₃-C-O), 27,71 (s, CH₃-C-CH), 29,39 (d, J_{C-P}=5,7Hz, CH₃-C-N), 35,44 (d, J_{C-P}=6,6Hz, C-CH-P), 51,33 (s, O-CH₃), 58,11 (d, J_{C-P}=7,2Hz, CH₂), 61,29 (d, J_{C-P} =7,4Hz, CH₂), 61,68 (s, C-N), 69,67 (d, J_{C-P}=136,8Hz, CH-P), 83,61 (s, CH-O), 175,11 (s, C=O).

### EXEMPLE 6

### Synthèse du N-tertiobutyl, N-1-diéthylphosphono-2,2-diméthylpropyl, O-1-perfluorohexylhydroxylamine (6) :

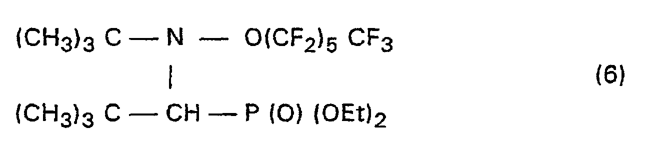

Le mode opératoire est le même que pour l'exemple 1 excepté que la réaction est conduite à 60°C. Les réactifs utilisés sont : iodure de perfiuorohexyle (1,34 g, 3 mmol), CuBr (0,43 g, 3 mmol), 2,2'-bipyridine (0,94 g, 6 mmol), DEPN 72 % (0,61 g, 1,5 mmol), benzène (10 ml). Le produit est purifié par chromatographie sur colonne de silice (éluant pentanelacétate d'éthyle 7/3). On obtient 0,50 g du composé (6) incolore.

Les résultats analytiques sont reportés ci-après :
Microanalyse : C₁₉H₂₉F₁₃NO₄P :
   % calculé : C 37,20 ; H 4,77 ; N 2,28
   % trouvé :C 37,18 ; H 4,76 ; N 2,21
   RMN ³¹P (CDCl₃) : δ 20,65
   RMN ¹H (CDCl₃) : δ 1,19 (s, 9H), 1,22 (s, 9H), 1,31 (t, 6H), 3,51 (d, JH-P=30Hz, 1H), 4,10 (m, 4H).
   RMN ¹⁹F : (CDCl₃)
   δ
      - 126,61 (m, C₅F₂, 2F)
      - 123,47 - -122,66 (m, 6F, C₂F₂, C₃F₂, C₄F₂)
      - 81,40 (t, 3F, J_{FF}=9Hz, CF₃)
      - 83,94 (dt, 1F, J_{FA-FB}=143,3 Hz, J_{FF}=12,9 Hz, FA)
      - 78,66 (dt, 1F, F_{FA-FB}=152,8 Hz, J_{FF}=9Hz, FB)
   RMN ¹³C : (CDCl₃)
   δ
      - 16,20 (t, JC-P=7,4 Hz, CH₃-CH₂)
      - 27,73 (s, CH₃-C-CH)
      - 30,35 (d, JCP=3,72 Hz, CH₃-C-N)
      - 36,33 (d, J_{C-P}=2,5Hz, CH₃-CH)
      - 60,66 (d, JCP=7,55 Hz, CH₃-CH₂-O)
      - 61,63 (d, JCP=7,04 Hz, CH₃-CH₂-O)
      - 63,91 (s, C-N)
      - 67,46 (d, 137,2 Hz=JCP; CH-P)
      - 105,2-121,9 (m, CF₂ et CF₃)
      - 127,8-133,9 (m, CF₂)

### EXEMPLE 7

### Synthèse du N-tertiobutyl, N-1-diéthylphosphono-2,2-diméthylpropyl, O-1-hexylhydroxylamine (7) :

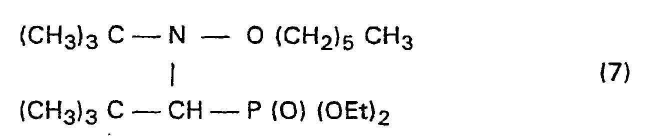

Dans un tube de Schlenk de 100 ml purgé à l'argon, on introduit 1,03 g de DEPN 94 % (3,3 mmol) et 30 ml de THF préalablement distillé sur sodium/benzophénone. On refroidit la solution à -90°C et on ajoute goutte à goutte à la seringue via un septum 0,6 ml d'une solution d'hexyllithium 2,5 M dans l'hexane (1,5 mmol). Le mélange réactionnel est ramené lentement à température ambiante, puis il est hydrolysé avec une solution saturée de NH₄Cl. La phase aqueuse est extraite 3 fois à l'éther. Les phases organiques sont rassemblées et séchées sur sulfate de magnésium, puis les solvants sont évaporés. Le produit est purifié par chromatographie sur colonne de silice en utilisant un éluant pentane/acétate d'éthyle 75/25. On obtient 0,36 g de composé (7) (rendement = 59 %).
RMN ³¹P (CDCl₃) : δ 83,72
RMN ¹H (CDCl₃) : δ 0,88 (t, 3H) ; 1,13 et 1,15 (2s, 18 H), 1,25-1,32 (m, 12H), 1,52-1,55 (m, 2H), 3,21 (d, J_{H-P}=24Hz, 1H), 3,60 (q, 1H), 3,92-4,17 (m, 5H).
RMN ¹³C : (CDCl₃) : δ 14,03 (s, CH₃), 16,29 (d, J_{C-P}=6,2Hz, CH₃CH₂), 16,63 (d, J_{C-P}=5,8Hz, CH₃CH₂), 22,61 (s, CH₂), 25,70 (s, CH₂), 27,74 (s, CH₃-C), 28,61 (s, CH₂), 29,90 (d, J_{C-P}=6,5Hz, CH₃-C-N), 31,87 (s, CH₂), 35,31 (d, J_{C-P}=5,8Hz, CH₃-C-CH), 58,80 (d,J_{C-P} =7,3Hz, CH₂), 61,40 (d, J_{C-P}=6,51Hz, CH₂-O), 61,60 (C-N), 69,59 (d, J_{C-P}=139,8Hz, CH-P), 76,45 (s, CH₂-O).
Microanalyse (C₁₉H₄₂NO₄P) : % calculé C 60,11 ; H 11,16 ; N 3,69 et % trouvé C 60,10 ; H 11,22 ; N 3,62.

### EXEMPLE 8

### Synthèse du N-tertiobutyl, N-1-diéthylphosphono-2,2-diméthylpropyl, O-cyclohexylhydroxylamine (8) :

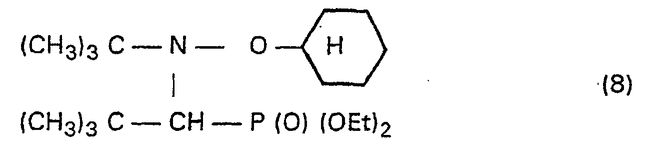

Le mode opératoire est le même que pour l'exemple 7. Les réactifs utilisés sont : DEPN 94 % (1,03 g, 3,3 mmol), bromure de cyclohexylmagnésium (0,75 ml d'une solution 2M dans l'éther, 1,5 mmol), THF (30 ml). Le produit est purifié par chromatographie sur colonne de silice (éluant pentane/éther 75/25). On obtient 0,42 g du composé (8) (rendement =75 %) sous forme d'une solide blanc.
RMN ³¹P(CDCl₃) : δ 23,57
RMN ¹H (CDCl₃) : δ 1,10 (t, 9H) ; 1,15 (s, 9 H), 1-1,15 (m, 4H), 1,27 et 1,30 (2t, 6H) ; 1,56-1,8 (m, 4H) ; 2,05-2,4 (m, 2H) ; 3,37(d, J_{H-P} =26,8Hz, 1H); 3,87-4,28 (m, 5H).
RMN ¹³C : (CDCl₃) : δ 16,37 (d, J_{C-P}=9,2Hz, CH₃CH₂), 16,41 (d, J_{C-P}=9,9Hz, CH₃CH₂), 24,95 (s, CH₂), 25,21 (s, CH₂), 26,30 (s, CH₂), 28,18 (s, CH₂-C), 30,84 (d, J_{C-P}=5,85Hz, CH₃-C-N), 31,99 (s, CH₂), 32,42 (s, CH₂), 35,32 (d, J_{C-P}=5,5Hz, C-CH-P), 58,80 (d,J_{C-P} =7,4Hz, CH₂-O), 60,50 (s, C-N), 61,48 (d, J_{C-P}=6Hz, CH₂-O), 69,66 (d, J_{C-P}=138,8Hz, CH-P), 79,67 (s, HC-O).
Microanalyse (C₁₉H₄₀NO₄P) : % calculé C 60,43 ; H 10,69 ; N 3,71 et % trouvé C 60,41 ; H 10,75 ; N 3,65.

### EXEMPLE 9

### Utilisation du N-tertiobutyl, N-1-diéthylphosphono-2,2-diméthylpropyl, O-1-phényléthylhydroxilamine (1) préparé selon l'exemple 1 comme amorceur dans la polymérisation du styrène :

Réactifs :
- Le styrène a été préalablement distillé sous pression réduite.

Polymérisation :
Dans un tricol muni d'une arrivée de gaz, sont introduits le styrène (4,93 g soit 0,047 mole) et le composé (1) (0,0952 g soit 2,38.10⁻⁴ mole). Le mélange est par la suite dégazé par bullage d'argon pendant 20 minutes, puis porté à 123°C dans un bain d'huile thermostaté. Pendant toute la durée de la réaction, le milieu est agité par un barreau aimanté sous atmosphère inerte. Les prélèvements sont effectués à intervalles réguliers à l'aide d'une seringue dégazée.

Analyses :
Les masses molaires moyennes en nombre (Mn) et les indices de polymolécularité (Ip) ont été mesurés par chromatographie d'exclusion stérique (C.E.S.). Les chromatogrammes ont été enregistrés par un appareil Spectra Physics muni d'une pompe SP8810, d'un réfractomètre différentiel Shodex RE-61RI, de deux colonnes Plgel mixed D (éluant : THF, 30°C). Les étalonnages ont été réalisés avec des échantillons de polystyrène standard.

La conversion est déterminée par mesure d'extrait sec sur les échantillons prélevés.

La masse théorique visée pour une conversion totale est toujours Mnₜₕ = 19800 g/mol.

Les résultats sont reportés dans le tableau 1

**TABLEAU 1**

| **Temps** **(minutes)** | **Mn**_{**exp**} **(g/mol)** | **I**_{**p**} | **Conversion** **(%)** | **Mn**_{**th**} **(g/mol)** | **In[M]**_{**o**}**/[M]**_{**t**} |
|---|---|---|---|---|---|
| 30 | 5049 | 1,33 | 24,2 | 4792 | 0,27 |
| 60 | 7429 | 1,26 | 36,7 | 7266 | 0,45 |
| 90 | 8906 | 1,26 | 47,3 | 9376 | 0,64 |
| 120 | 10515 | 1,24 | 56,8 | 11251 | 0,83 |
| 150 | 12157 | 1,24 | 63,5 | 12578 | 1,00 |
| 180 | 13002 | 1,24 | 69 | 13677 | 1,17 |
| 210 | 13624 | 1,25 | 74,1 | 14677 | 1,35 |
| 240 | 14114 | 1,25 | 80,6 | 15972 | 1,64 |
| 270 | 14200 | 1,24 | 83,1 | 16455 | 1,77 |

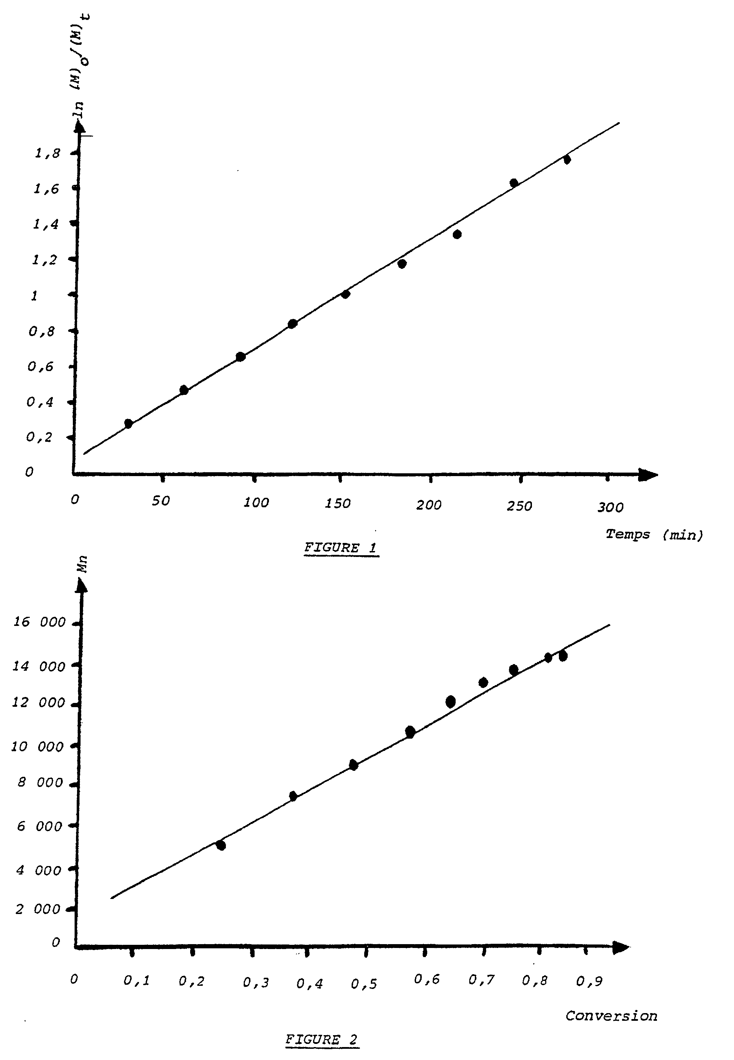

Ces résultats permettent de tracer les deux courbes cinétiques suivantes :
nous avons représenté sur la figure 1 le In[M]ₒ/[M]ₜ en fonction du temps et sur la figure 2 Mn en fonction de la conversion.

Le bon alignement des points et le faible indice de polymolécularité (Iₚ) sont caractéristiques d'une polymérisation radicalaire contrôlée.

## Revendications

1. Composés de formule : 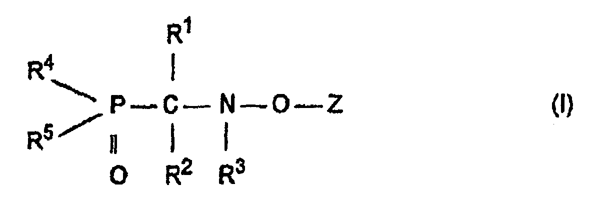 dans laquelle R¹ et R², identiques ou différents, représentent un atome d'hydrogène, un radical alkyle linéaire ou ramifié ayant un nombre d'atomes de carbone allant de 1 à 10, un radical aryle, un radical aralkyle ayant un nombre d'atomes de carbone au plus égal à 10, ou bien R¹ et R² sont reliés entre eux de façon à former un cycle incluant l'atome de carbone portant lesdits R¹ et R², ledit cycle ayant un nombre d'atomes de carbone, incluant le carbone porteur des radicaux R¹ et R², allant de 3 à 8 ; R³ représente un radical hydrocarboné, linéaire ou ramifié, saturé ou insaturé, pouvant comprendre au moins un cycle, ledit radical ayant un nombre d'atomes de carbone allant de 1 à 30 ; R⁴ et R⁵ identiques ou différents, représentent un radical alkyle, linéaire ou ramifié, un radical cycloalkyle, aryle, alcoxyle, aryloxyle, aralkyloxyle, perfluoroalkyle, aralkyle, thioalkyle ayant un nombre d'atomes de carbone allant de 1 à 20, ou bien R⁴ et R⁵ sont reliés entre eux de façon à former un cycle incluant l'atome de phosphore, ledit hétérocycle ayant un nombre d'atomes de carbone allant de 2 à 6 et peut contenir en outre un ou plusieurs atomes d'oxygène ou de soufre;
Z est un radical CF₃(CF₂)₅-, (CH₃)₂C(CN)-, ou un reste de formule : 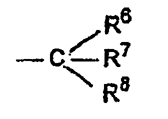 dans laquelle R⁸, R⁷ et R⁸, identiques ou différents, représentent un atome d'hydrogène, un radical cyano, un radical cycloalkyle ayant un nombre d'atomes de carbone allant de 3 à 12 ; un radical -(CH₂)n C(O)OR⁹ dans lequel R⁹ représente un alkyle, linéaire ou ramifié, ayant un nombre d'atomes de carbone allant de 1 à 6, n=0 à 6.

2. Composés selon la revendication 1, **caractérisés en ce que** R¹=H, R²=R³=(CH₃)₃C-, R⁴=R⁵=CH₃CH₂O- et que Z répond à l'un des restes: (CH₃)₂C(CN)-, CH₃OC(O)C(CH₃)₂-, CH₃OC(O)CH(CH₃)-, C₆F₁₃-.

3. Le N-tertiobutyl, N-1-diéthylphosphono-2,2-diméthyl-propyl, O-1-cyano-1-méthyléthylhydroxylamine :

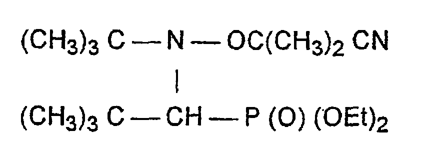

4. Le N-tertiobutyl, N-1-diéthylphosphono-2,2-diméthyl-propyl, O-1-méthyl-1-méthoxycarbonyléthylhydroxytamine :

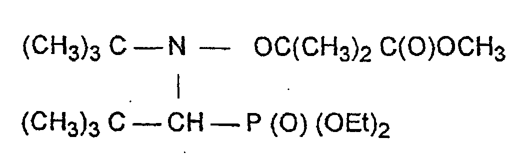

5. Le N-tertiobutyl, N-1-diéthylphosphono-2,2-diméthyl-propyl, O-1-méthoxycarbonyléthylhydroxylamine :

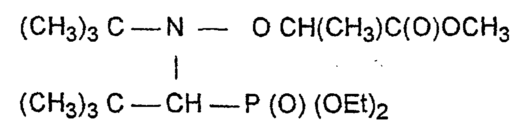

6. Le N-tertiobutyl, N-1-diéthylphosphono-2,2-diméthyl-propyl, O-1-perfluorohexyl hydroxylamine :

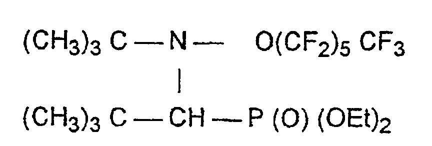

7. Utilisation comme amorceurs des polymérisations ou copolymérisations d'au moins un monomère polymérisable par voie radicalaire, des composés de formule: 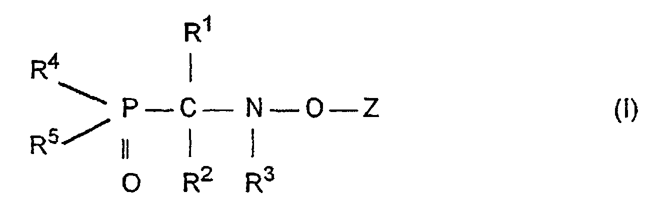 dans laquelle R¹ et R², identiques ou différents, représentent un atome d'hydrogène, un radical alkyle linéaire ou ramifié ayant un nombre d'atomes de carbone allant de 1 à 10, un radical aryle, un radical aralkyle ayant un nombre d'atomes de carbone allant de 1 à 10, ou bien R¹ et R² sont reliés entre eux de façon à former un cycle incluant l'atome de carbone portant lesdits R¹ et R², ledit cycle ayant un nombre d'atomes de carbone, incluant le carbone porteur des radicaux R¹ et R², allant de 3 à 8 ; R³ représente un radical hydrocarboné, linéaire ou ramifié, saturé ou insaturé, pouvant comprendre au moins un cycle, ledit radical ayant un nombre d'atomes de carbone allant de 1 à 30 ; R⁴ et R⁵ identiques ou différents, représentent un radical alkyle, linéaire ou ramifié, un radical cycloalkyle, aryle, alcoxyle, aryloxyle, aralkyloxyle, perfluoroalkyle, aralkyle, thioalkyle ayant un nombre d'atomes de carbone allant de 1 à 20, ou bien R⁴ et R⁵ sont reliés entre eux de façon à former un cycle incluant l'atome de phosphore, ledit hétérocycle ayant un nombre d'atomes de carbone allant de 2 à 6 et peut contenir en outre un ou plusieurs atomes d'oxygène ou de soufre ;
Z est un radical CF₃(CF₂)₅-, un radical cycloalkyle ayant un nombre d'atomes de carbone allant de 3 à 12, ou un reste de formule : 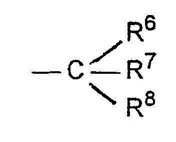 dans laquelle R⁶, R⁷ et R⁸, identiques ou différents, représentent un atome d'hydrogène, un radical alkyle, linéaire ou ramifié, ayant un nombre d'atomes de carbone allant de 1 à 10, un radical phényle, un radical benzyle, un radical cyano, un radical cycloalkyle ayant un nombre d'atomes de carbone allant de 3 à 12 ; un radical -(CH₂)n C(O)OR⁹ dans lequel R⁹ représente un alkyle, linéaire ou ramifié, ayant un nombre d'atomes de carbone allant de 1 à 6, n=0 à 6.

8. Utilisation selon la revendication 7 des composés de formule (I) dans laquelle R¹=H, R²=R³=(CH₃)₃C-, R⁴=R⁵=CH₃CH₂O- et que Z répond à l'un des restes : C₆H₅CH₂-, (CH₃)₂C(CN)-, CH₃OC(O)C(CH₃)₂-, CH₃OC(O)CH(CH₃)-, C₆F₁₃-, C₆H₅CH(CH₃)-, C₆H₅C(CH₃)₂-, C₆H₁₂-, CH₃(CH₂)₅-.

9. Utilisation selon l'une des revendications 7 ou 8 du N-tertiobutyl, N-1-diéthylphosphono-2,2-diméthylpropyl, O-1-phényléthylhydroxylamine :

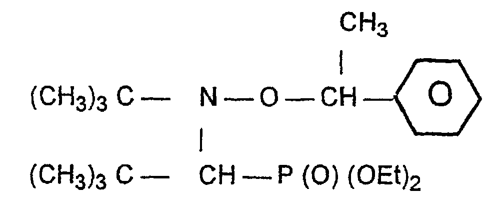

10. Utilisation selon l'une des revendications 7 ou 8 du N-tertiobutyl, N-1diéthylphosphono-2,2-diméthylpropyl, O-benzylhydroxylamine :

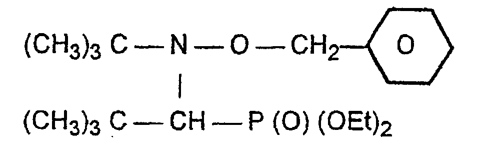

11. Utilisation selon l'une des revendications 7 ou 8 du N-tertiobutyl, N-1-diéthylphosphono-2,2-diméthyl-propyl, O-1-cyano-1-méthyléthylhydroxylamine :

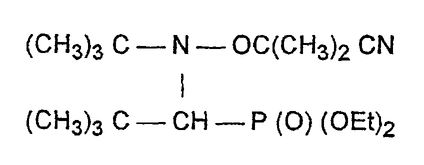

12. Utilisation selon l'une des revendications 7 ou 8 du N-tertiobutyl, N-1-diéthylphosphono-2,2-diméthyl-propyl, O-1-méthyl-1-méthoxycarbonyléthylhydroxylamine:

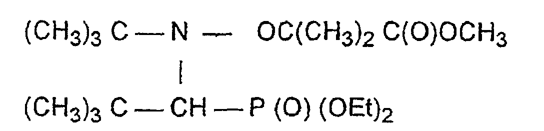

13. Utilisation selon l'une des revendications 7 ou 8 du N-tertiobutyl, N-1-diéthylphosphono-2,2-diméthyl-propyl, O-1-méthoxycarbonyléthylhydroxylamine:

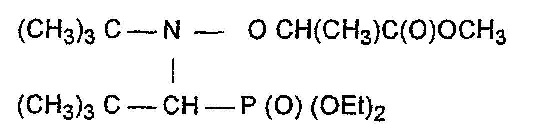

14. Utilisation selon l'une des revendications 7 ou 8 du N-tertiobutyl, N-1-diéthylphosphono-2,2-diméthyl-propyl, O-1-perfluorohexyl hydroxylamine :

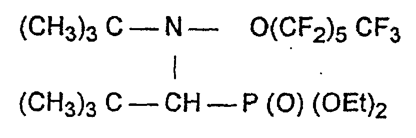

15. Utilisation selon l'une des revendications 7 ou 8 du N-tertiobutyl, N-1-diéthylphosphono-2,2-diméthyl-propyl, O-1-hexylhydroxylamine :

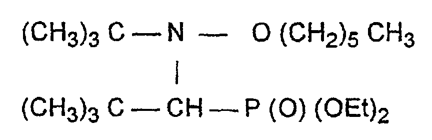

16. Utilisation selon l'une des revendications 7 ou 8 du N-tertiobutyl, N-1-diéthylphosphono-2,2-diméthyl-propyl, O-cyclohexyl hydroxylamine :

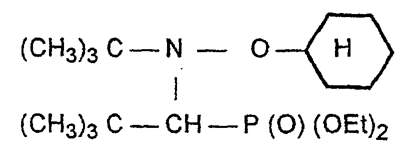

17. Utilisation selon l'une des revendications 7 à 16, **caractérisée en ce que** le monomère polymérisable est le styrène, l'acrylate de méthyle ou l'acrylate de butyle.

## Claims

1. Compounds of formula: 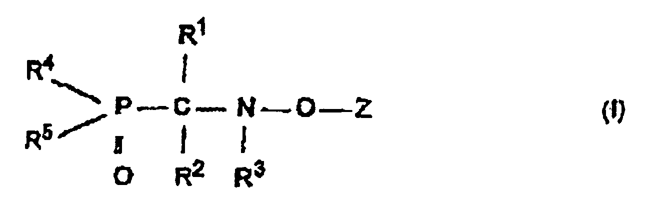 in which R¹ and R², which may be identical or different, represent a hydrogen atom, a linear or branched alkyl radical containing a number of carbon atoms ranging from 1 to 10, an aryl radical, an aralkyl radical containing a number of carbon atoms of not more than 10, or R¹ and R² are linked together so as to form a ring including the carbon atom bearing the said R¹ and R², the said ring containing a number of carbon atoms, including the carbon bearing the radicals R¹ and R², ranging from 3 to 8; R³ represents a linear or branched, saturated or unsaturated hydrocarbon-based radical which may comprise at least one ring, the said radical containing a number of carbon atoms ranging from 1 to 30; R⁴ and R⁵, which may be identical or different, represent a linear or branched alkyl radical, a cycloalkyl, aryl, alkoxy, aryloxy, aralkyloxy, perfluoroalkyl, aralkyl or thioalkyl radical containing a number of carbon atoms ranging from 1 to 20 or R⁴ and R⁵ are linked together so as to form a ring including the phosphorus atom, the said heterocycle containing a number of carbon atoms ranging from 2 to 6 and possibly also containing one or more oxygen or sulphur atoms ;
Z is a radical CF₃(CF₂)₅-, (CH₃)₂C(CN)-, or a residue of formula: 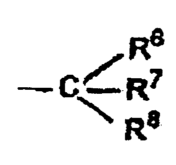 in which R⁶, R⁷ and R⁸, which may be identical or different, represent a hydrogen atom, a cyano radical or a cycloalkyl radical containing a number of carbon atoms ranging from 3 to 12; a radical -(CH₂)ₙ-C(O)OR⁹ in which R⁹ represents a linear or branched alkyl containing a number of carbon atoms ranging from 1 to 6 and n = 0 to 6.

2. Compounds according to Claim 1, **characterized in that** R¹=H, R²=R³=(CH₃)₃C-, R⁴=R⁵=CH₃CH₂O- and **in that** Z corresponds to one of the residues: (CH₃)₂C(CN)-, CH₃OC(O)C(CH₃)₂-, CH₃OC(O)CH(CH₃)-, C₆F₁₃-.

3. N-tert-Butyl-N-1-diethylphosphono-2,2-dimethylpropyl-O-1-cyano-1-methylethylhydroxylamine:

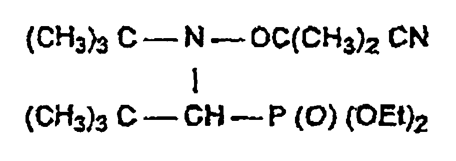

4. N-tert-Butyl-N-1-diethylphosphono-2,2-dimethylpropyl-O-1-methyl-1-methoxycarbonylethylhydroxylamine:

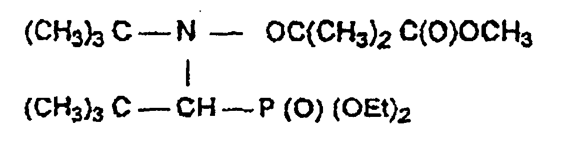

5. N-tert-Butyl-N-1-diethylphosphono-2,2-dimethylpropyl-O-1-methoxycarbonylethylhydroxylamine:

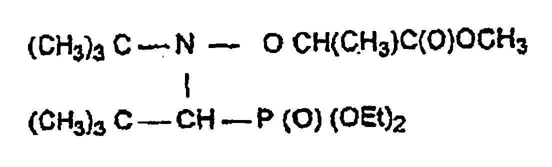

6. N-tert-Butyl-N-1-diethylphosphono-2,2-dimethylpropyl-O-1-perfluorohexylhydroxylamine:

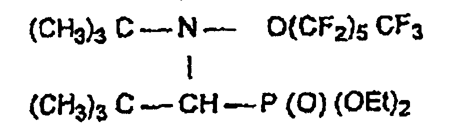

7. Use, as polymerization or copolymerization initiators, of at least one monomer which may undergo a free-radical polymerization, of the compounds of formula: 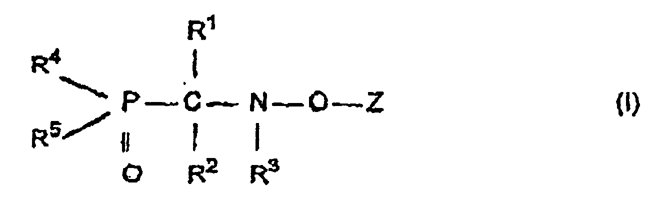 in which R¹ and R², which may be identical or different, represent a hydrogen atom, a linear or branched alkyl radical containing a number of carbon atoms ranging from 1 to 10, an aryl radical, an aralkyl radical containing a number of carbon atoms ranging from 1 to 10, or R¹ and R² are linked together so as to form a ring including the carbon atom bearing the said R¹ and R², the said ring having a number of carbon atoms, including the carbon bearing the radicals R¹ and R², ranging from 3 to 8; R³ represents a linear or branched, saturated or unsaturated hydrocarbon-based radical which may comprise at least one ring, the said radical containing a number of carbon atoms ranging from 1 to 30; R⁴ and R⁵, which may be identical or different, represent a linear or branched alkyl radical, a cycloalkyl, aryl, alkoxy, aryloxy, aralkyloxy, perfluoroalkyl, aralkyl or thioalkyl radical containing a number of carbon atoms ranging from 1 to 20, or R⁴ and R⁵ are. linked together so as to form a ring including the phosphorus atom, the said heterocycle containing a number of carbon atoms ranging from 2 to 6 and possibly also containing one or more oxygen or sulphur atoms;
z is a radical CF₃(CF₂)₅-, a cycloalkyl radical containing a number of carbon atoms ranging from 3 to 12 or a residue of formula: 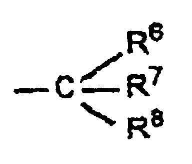 in which R⁶, R⁷ and R⁸, which may be identical or different, represent a hydrogen atom, a linear or branched alkyl radical containing a number of carbon atoms ranging from 1 to 10, a phenyl radical, a benzyl radical, a cyano radical or a cycloalkyl radical containing a number of carbon atoms ranging from 3 to 12; a radical - (CH₂)n-C(O)OR⁹ in which R⁹ represents a linear or branched alkyl containing a number of carbon atoms ranging from 1 to 6 and n = 0 to 6.

8. Use according to Claim 7 of the compounds of formula (I) in which R¹=H, R²=R³=(CH₃)₃C-, R⁴=R⁵=CH₃CH₂O- and in that Z corresponds to one of the residues: C₆H₅CH₂-, (CH₃)₂C(CN)-, CH₃OC(O)C(CH₃)₂-, CH₃OC(O)CH(CH₃)-, C₆F₁₃-, C₆H₅CH(CH₃)-, C₆H₅C(CH₃)₂-, C₆H₁₂-, CH₃(CH₂)₅-.

9. Use according to either of Claims 7 and 8 of N-tert-butyl-N-1-diethylphosphono-2,2-dimethylpropyl-O-1-phenylethylhydroxylamine:

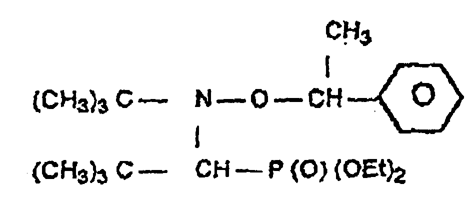

10. Use according to either of Claims 7 and 8 of N-tert-butyl-N-1-diethylphosphono-2,2-dimethylpropyl-O-benzylhydroxylamine:

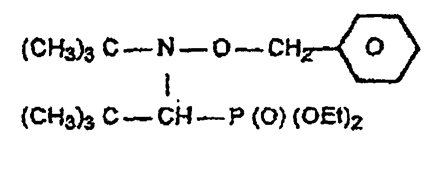

11. Use according to either of Claims 7 and 8 of N-tert-butyl-N-1-diethylphosphono-2,2-dimethylpropyl-O-1-cyano-1-methylethylhydroxylamine:

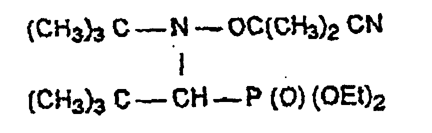

12. Use according to either of Claims 7 and 8 of N-tert-butyl-N-1-diethylphosphono-2,2-dimethylpropyl-O-1-methyl-1-methoxycarbonylethylhydroxylamine:

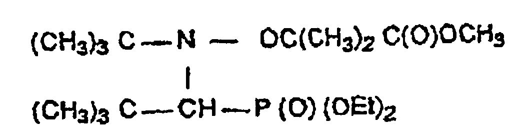

13. Use according to either of Claims 7 and 8 of N-tert-butyl-N-1-diethylphosphono-2,2-dimethylpropyl-O-1-methoxycarbonylethylhydroxylamine:

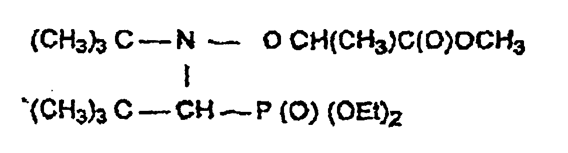

14. Use according to either of Claims 7 and 8 of N-tert-butyl-N-1-diethylphosphono-2,2-dimethylpropyl-O-1-perfluorohexylhydroxylamine:

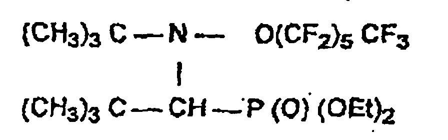

15. Use according to either of Claims 7 and 8 of N-tert-butyl-N-1-diethylphosphono-2,2-dimethylpropyl-O-1-hexylhydroxylamine:

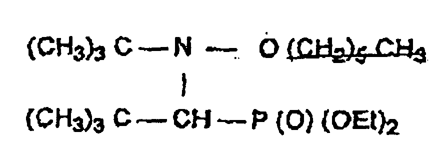

16. Use according to either of Claims 7 and 8 of N-tert-butyl-N-1-diethylphosphono-2,2-dimethylpropyl-O-cyclohexylhydroxylamine:

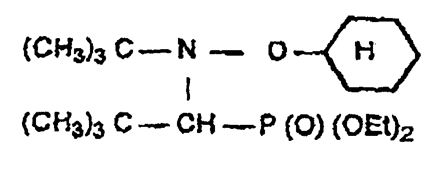

17. Use according to one of Claims 7 to 16, **characterized in that** the polymerizable monomer is styrene, methyl acrylate or butyl acrylate.

## Patentansprüche

1. Verbindungen der Formel 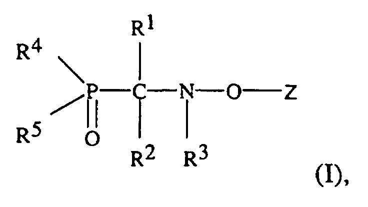 in der R' und R², identisch oder verschieden, ein Wasserstoffatom, einen linearen oder verzweigten Alkylrest mit 1 bis 10 Kohlenstoffatomen, einen Arylrest, einen Aralkylrest mit höchstens 10 Kohlenstoffatomen darstellen oder R¹ und R² derart miteinander verbunden sind, daß sie einen Ring bilden, der das Kohlenstoffatom umfaßt, das Träger von R¹ und R² ist, wobei der Ring einschließlich dem Kohlenstoffatom, das Träger der Reste R¹ und R² ist, 3 bis 8 Kohlenstoffatome aufweist; R³ einen gesättigten oder ungesättigten, linearen oder verzweigten Kohlenwasserstoffrest darstellt, der mindestens einen Ring enthalten kann, wobei der Rest 1 bis 30 Kohlenstoffatome aufweist; R⁴ und R⁵, identisch oder verschieden, einen linearen oder verzweigten Alkylrest, einen Cycloalkyl-, Aryl-, Alkoxyl-, Aryloxyl-, Aralkyloxyl-, Perfluoralkyl-, Aralkyl- oder Thioalkylrest mit 1 bis 20 Kohlenstoffatomen darstellen oder R⁴ und R⁵ derart miteinander verbunden sind, daß sie einen Ring bilden, der das Phosphoratom umfaßt, wobei der Heterocyclus 2 bis 6 Kohlenstoffatome aufweist und außerdem ein oder mehrere Sauerstoffoder Schwefelatom(e) enthalten kann; Z einen CF₃(CF₂)₅ -, (CH₃)₂C(CN)-Rest oder einen Rest der Formel: 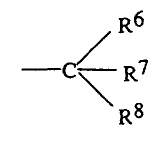 darstellt, in dem R⁶, R⁷ und R⁸, identisch oder verschieden, ein Wasserstoffatom, einen Cyanorest, einen Cycloalkylrest mit 3 bis 12 Kohlenstoffatomen, einen -(CH₂)ₙC(O)OR⁹-Rest mit n = 0 bis 6 darstellen, in dem R⁹ ein linearer oder verzweigter Alkylrest mit 1 bis 6 Kohlenstoffatomen ist.

2. Verbindungen nach Anspruch 1, **dadurch gekennzeichnet, daß** R¹ = H, R² = R³ = (CH₃)₃C-, R⁴ = R⁵ = CH₃CH₂O- ist und Z einem der Reste (CH₃)₂C(CN)-, CH₃OC(O)C(CH₃)₂-, CH₃OC(O)CH(CH₃)- oder C₆F₁₃ - entspricht.

3. N-tert.-Butyl-N-1-diethylphosphono-2,2-dimethylpropyl-O-1-cyano-1-methylethylhydroxylamin:

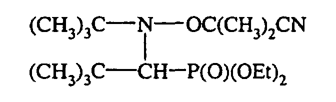

4. N-tert.-Butyl-N-1-diethylphosphono-2,2-dimethylpropyl-O-1-methyl-1-methoxycarbonylethylhydroxylamin:

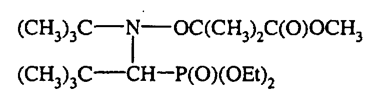

5. N-tert.-Butyl-N-1-diethylphosphono-2,2-dimethylpropyl-O-1-methoxycarbonylethylhydroxylamin:

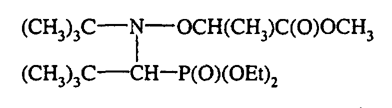

6. N-tert.-Butyl-N-1-diethylphosphono-2,2-dimethylpropyl-O-1-perfluorohexylhydroxylamin:

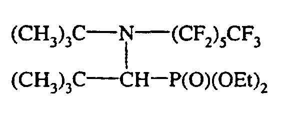

7. Verwendung von Verbindungen der Formel 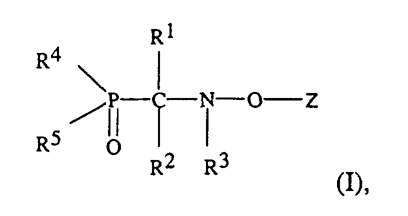 als Initiatoren für Polymerisationen oder Copolymerisationen mindestens eines radikalisch polymerisierbaren Monomers, wobei in der Formel (I) R¹ und R², identisch oder verschieden, ein Wasserstoffatom, einen linearen oder verzweigten Alkylrest mit 1 bis 10 Kohlenstoffatomen, einen Arylrest, einen Aralkylrest mit 1 bis 10 Kohlenstoffatomen darstellen oder R¹ und R² derart miteinander verbunden sind, daß sie einen Ring bilden, der das Kohlenstoffatom umfaßt, das Träger von R¹ und R² ist, wobei der Ring einschließlich dem Kohlenstoffatom, das Träger der Reste R¹ und R² ist, 3 bis 8 Kohlenstoffatome aufweist; R³ einen gesättigten oder ungesättigten, linearen oder verzweigten Kohlenwasserstoffrest darstellt, der mindestens einen Ring enthalten kann, wobei der Rest 1 bis 30 Kohlenstoffatome aufweist; R⁴ und R⁵, identisch oder verschieden, einen linearen oder verzweigten Alkylrest, einen Cycloalkyl-, Aryl-, Alkoxyl-, Aryloxyl-, Aralkyloxyl-, Perfluoralkyl-, Aralkyl- oder Thioalkylrest mit 1 bis 20 Kohlenstoffatomen darstellen oder R⁴ und R⁵ derart miteinander verbunden sind, daß sie einen Ring bilden, der das Phosphoratom umfaßt, wobei der Heterocyclus 2 bis 6 Kohlenstoffatome aufweist und außerdem ein oder mehrere Sauerstoff- oder Schwefelatom(e) enthalten kann; Z einen CF₃(CF₂)₅-, einen Cycloalkylrest mit 3 bis 12 Kohlenstoffatomen oder einen Rest der Formel: 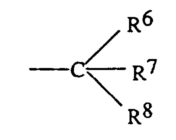 darstellt, in dem R⁶, R⁷ und R⁸, identisch oder verschieden, ein Wasserstoffatom, einen linearen oder verzweigten Alkylrest mit 1 bis 10 Kohlenstoffatomen, einen Phenylrest, einen Benzylrest, einen Cyanorest, einen Cycloalkylrest mit 3 bis 12 Kohlenstoffatomen, einen -(CH₂)ₙC(O)OR⁹-Rest mit n = 0 bis 6 darstellen, in dem R⁹ ein linearer oder verzweigter Alkylrest mit 1 bis 6 Kohlenstoffatomen ist.

8. Verwendung nach Anspruch 7 der Verbindungen der Formel (I), in der R¹ = H, R² = R³ = (CH₃)₃C-, R⁴ = R⁵ = CH₃CH₂O- und in der Z einem der Reste entspricht: C₆H₅CH₂-, (CH₃)₂C(CN)-, CH₃OC(O)C(CH₃)₂-, CH₃OC(O)CH(CH₃)-, C₆F₁₃ -, C₆H₅CH(CH₃)-, C₆H₅C(CH₃)₂-, C₆H₁₂- oder CH₃(CH₂)₅ -.

9. Verwendung nach Anspruch 7 oder 8 von N-tert.-Butyl-N-1-diethylphosphono-2,2-dimethylpropyl-O-1-phenylethylhydroxylamin:

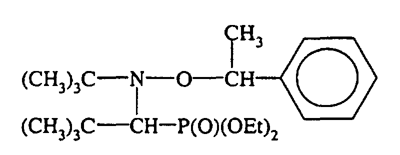

10. Verwendung nach Anspruch 7 oder 8 von N-tert.-Butyl-N-1-diethylphosphono-2,2-dimethylpropyl-O-1-benzylhydroxylamin:

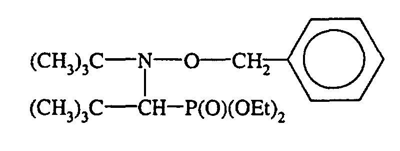

11. Verwendung nach Anspruch 7 oder 8 von N-tert.-Butyl-N-1-diethylphosphono-2,2-dimethylpropyl-O-1-cyano-1-methylethylhydroxylamin:

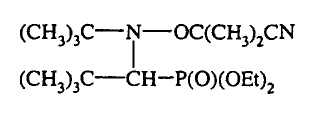

12. Verwendung nach Anspruch 7 oder 8 von N-tert.-Butyl-N-1-diethylphosphono-2,2-dimethylpropyl-O-1-methyl-1-methoxycarbonylethylhydroxylamin:

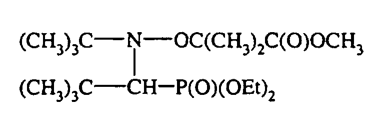

13. Verwendung nach Anspruch 7 oder 8 von N-tert.-Butyl-N-1-diethylphosphono-2,2-dimethylpropyl-O-1-methoxycarbonylethylhydroxylamin:

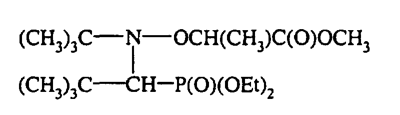

14. Verwendung nach Anspruch 7 oder 8 von N-tert.-Butyl-N-1-diethylphosphono-2,2-dimethylpropyl-O-1-perfluorhexylhydroxylamin:

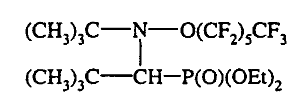

15. Verwendung nach Anspruch 7 oder 8 von N-tert.-Butyl-N-1-diethylphosphono-2,2-dimethylpropyl-O-1-hexylhydroxylamin:

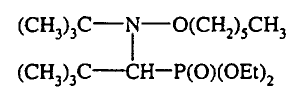

16. Verwendung nach Anspruch 7 oder 8 von N-tert.-Butyl-N-1-diethylphosphono-2,2-dimethylpropyl-O-cyclohexylhydroxylamin:

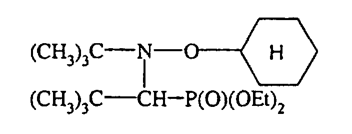

17. Verwendung nach einem der Ansprüche 7 bis 16, **dadurch gekennzeichnet, daß** das polymerisierbare Monomer Styrol, Methylacrylat oder Butylacrylat ist.
